# EUROPEAN PATENT SPECIFICATION

(11) **EP 0 510 537 B1**
(45) Date of publication and mention of the grant of the patent: **23.07.1997**
(21) Application number: 92106643.7
(22) Date of filing: 16.04.1992
(51) Int. Cl.: A23J 1/12

(54) **Process for treating zein containing material**
Verfahren zur Behandlung eines Zein enthaltenden Materials
Procédé de traitement d'un matériel contenant de zéine

(30) Priority: 23.04.1991 JP 117893/91
(43) Date of publication of application: 28.10.1992
(73) Proprietor: Showa Sangyo Co., Ltd., Chiyoda-ku Tokyo (JP)
(72) Inventor: Takahashi, Hidekazu, c/o SHOWA SANGYO CO., LTD., Funabashi-shi, Chiba-ken (JP); Yamada, Kohji, c/o SHOWA SANGYO CO., LTD., Funabashi-shi, Chiba-ken (JP); Yanai, Norimasa, c/o SHOWA SANGYO CO., LTD., Funabashi-shi, Chiba-ken (JP)
(74) Representative: VOSSIUS & PARTNER

(56) References cited:
- DE-A- 2 002 377
- FR-A- 853 632
- US-A- 2 388 389
- US-A- 3 535 305

## Description

The present invention relates to a process for treating a zein containing material, and more particularly for treating the material to decrease smell and color tone thereof, and obtaining a zein component decreased in smell and color tone.

Zein is main ingredient of corn proteins and dissolves in various alcohols and alkali solutions. The zein solution shows adhesiveness and has an ability to form films and fibers. For instance, when the zein solution is applied by spraying or dipping on an outer surface of an object and dried, a film is formed thereon, which is excellent in quality of resisting to water, acid and heat as well as in electric insulation ability. Therefore, zein has widely been employed as a raw material e.g. for preparing waterproof stuff for papers, paint for wood works, adhesive for plywoods, damp-proofing agent and coating agent for foods and tablets (medicine).

Various processes have been proposed for extracting and purifying zein. In JP-A-167700/1986 and Martinue Nijhoff et al "Seed Proteins Biochemistry, Genetics, Nutritive Value", page 275 - 285 (1983), there are described extraction processes, wherein corn gluten meal containing zein is treated with 70 - 90% (V/V) ethyl alcohol, about 90% (V/V) isopropyl alcohol or a similar water-containing lower alcohol, and then the alcohol is distilled off to obtain the zein. In JP-B-16800/1975 there is described a process, wherein the zein is extracted from wheat gluten with 60 - 95% (V/V) aqueous acetone, methylethylketone or diethyleneglycol solution under stirring at a temperature of 50 - 70°C.

The zein obtained by the above conventional processes has an inherent color and smell and thus can not sufficiently satisfy recent severe requirements in food and medicine preparation industries. Further, it is difficult to stably supply the zein product with nice quality, since a remarkable fluctuation in quality will occur due to differences in the raw materials to be used, when such a conventional process is applied for.

As processes for purifying the zein, there are those, wherein the zein containing alcohol or alkali solution is cooled to cause precipitation of the zein and the resulting block-like precipitate is dried ["Industrial and Engineering Chemistry", Vol. 33, No.3, page 394 (1941)], and wherein the zein solution is poured into water or a salt solution, for instance sodium chloride solution to cause precipitation of the zein and the resulting precipitate is dried to obtain the zein product which has good solubility in ethyl alcohol [JP-A-185999 (1988)].

The former process has the disadvantages that the block-like precipitate is difficult to wash since the solution should be kept at a temperature of -20°C or below to avoid denaturation of the zein due to water contained therein. The severe cooling condition and subsequent drying increase the costs. While, the latter purification process has also disadvantages in that the color and smell can not sufficiently be removed, cooling reservation of the precipitate is required to avoid denaturation, and freeze-drying of the precipitate results in an increase of costs.

US-A-3 535 305 and DE-A-2 002 377 disclose a high-purity zein which is produced by extracting grain gluten with a concentrated aqueous alcohol solution or the like, separating gluten solids from the resulting extract, precipitating a taffy-like zein-alcohol phase from the extract by cooling it, decanting supernatant solvent from the zein-alcohol phase, and recovering the zein product from the latter.

US-A-2 388 389 relates to methods of preparing solutions and coating compositions of prolamines or prolamine-containing proteins directly from glutens, either corn, wheat, barley, etc. It is particularly directed to such methods which will produce solutions and coating compositions of the alcohol-soluble portion of corn gluten, of controlled solution and gelling characteristics.

FR-A-853 632 relates to a process for extracting zein using particularly alcohols.

Therefore, an object of the present invention is to provide a process for purifying a zein containing material to remarkably decrease the smell and color tone thereof.

Another object of the invention is provide a process for obtaining a zein component which is decreased in smell and color tone.

The invention is defined in claim 1.

The term of "zein containing raw material" is defined as including those of pulverized corn, pulverized wheat and gluten meal as well as various crude zein products prepared in accordance with conventional methods by using at least one of those as raw material. As the method for contacting the raw material with the acetone solution, there are conventional ones such as dipping, mixing, stirring and refluxing and one of those can be selected by taking workability, cost and other factors into consideration. The concentration of the acetone solution to be selected is different depending on the kind of raw material and moisture or water content thereof, but it is preferable to use a 70 - 100% and more preferably 85 - 98% (V/V) solution for pulverized corn and gluten meal, and a 90 - 100% and more preferably 92 - 98% (V/V) solution for crude zein products. If an acetone solution with a concentration lower than 70% (V/V) is employed, at least a part of the zein component elutes into the acetone solution to cause a loss, the viscosity of the resulting solution increases to decrease workability, and sufficient effects with respect to sufficient removal of color and smell can not be obtained. The ground that the acetone solution is kept at a temperature of 25 - 60°C lies in suppressing the elusion of zein into acetone solution and preventing the increase in viscosity of the solution. In this viewpoint, it is preferable to keep the temperature of the acetone solution in a range of 30 - 60°C.

The above process can be combined with a step for extracting the zein component. This extraction step per se can be carried out in conventional manner with use of an aqueous alcohol solution or alkali solution, as pre- or post-treatment of the treatment with acetone, or both stages, to attain the second object.

As the alcohol solution, it is preferable to use about 90% (V/V) aqueous ethyl alcohol kept at a temperature of 30 - 75°C.

The invention will now be further explained in more detail and concretely with reference to Examples, Comparative Examples, and Comparative Test Example.

### Example 1

To 100g of gluten meal were added 500ml of 80% (V/V) aqueous acetone solution and the mixture was stirred at 45°C for 4 hours. After filtration, the resulting solid was dried in vacuo. The smell and hue of the obtained product were checked by a professional panel.

The results are shown in the following Table 1.

**Table 1**

| | Before treatment | | | After treatment | | |
|---|---|---|---|---|---|---|
| Persons (*) | 0 | | | 12 | | |
| Hue | L | a | b | L | a | b |
| | 67.4 | -0.4 | 15.6 | 80.5 | -0.8 | 11.4 |

In Table 1,
- * :: Number of persons indicating an improvement,
- L :: Lightness,
- a :: Index showing intensity of color tone from red (+) to green (-), and
- b :: Index showing intensity of color tone from yellow (+) to blue (-).

### Example 2

To 20kg of processed zein prepared according to the process disclosed in JP-A-185999/1988 were added 140 litre of 98% (V/V) aqueous acetone solution and the mixture was stirred at 30°C for 1 hour. After filtration, the resulting solid was dried in vacuo. The smell and hue of the product were checked by a professional panel.

The results are shown in the following Table 2.

**Table 2**

| | Before treatment | | | After treatment | | |
|---|---|---|---|---|---|---|
| Persons (*) | 0 | | | 12 | | |
| Hue | L | a | b | L | a | b |
| | 94.0 | -2.4 | 19.8 | 94.3 | -1.8 | 11.4 |

In Table 2,
- * :: Number of persons indicating an improvement,
- L :: Lightness,
- a :: Index showing intensity of color tone from red (+) to green (-), and
- b :: Index showing intensity of color tone from yellow (+) to blue (-).

### Example 3

To 100g of gluten meal were added 500ml of 90% (V/V) aqueous ethyl alcohol solution and the mixture was stirred at 60°C for 2 hours, while keeping the pH in a range of 8.8 - 8.5 by intermittently adding 1N-NaOH solution. The resulting solution was centrifuged to remove solids and the solution was filtered. The filtrate was concentrated to dryness in vacuo to obtain a yellowish solid with an inherent strong smell.

The solid was milled to add the same into 98% (V/V) aqueous acetone solution of 5 folds in volume and stirred at 35°C for 4 hours. Thereafter, the suspension was centrifuged to recover solids and dried in vacuo to afford the desired zein product (Purity as protein : 91.2%, Yield : 21.5%).

### Example 4

To 100g of gluten meal were added 500ml of 90% (V/V) aqueous acetone solution and the mixture was stirred at 40°C for 2 hours. After filtration and feeding of dried air to remove remaining acetone, the resulting solid was added into 500ml of 90% (V/V) aqueous ethyl alcohol solution and stirred at 60°C for 2 hours, while keeping the pH in a range of 8.8 - 8.5 by intermittently adding 1N-NaOH solution. The resulting solution was centrifuged to remove solids and the solution was filtered.

The filtrate was concentrated to dryness in vacuo to afford the desired zein product (Purity as protein : 90.8%, Yield : 20.3%).

### Example 5

To 100g of gluten meal were added 500ml of 80% (V/V) aqueous acetone solution and the mixture was stirred at 40°C for 2 hours. After filtration and feeding of dried air to remove remaining acetone, the resulting solid was added into 500ml of 90% (V/V) aqueous ethyl alcohol solution and stirred at 60°C for 2 hours, while keeping the pH in a range of 8.8 - 8.5 by intermittently adding 1N-NaOH solution. The resulting solution was centrifuged to remove solids and the solution was filtered.

The filtrate was concentrated until its solid concentration becomes 20%. The concentrate was added dropwise into chilled water of 10 folds in volume to precipitate a zein component therein. The precipitate was centrifuged to afford the desired zein product (Purity as protein : 96.7%, Yield : 15.9%).

### Comparative Example 1

To 100g of gluten meal were added 500ml of 90% (V/V) aqueous ethyl alcohol solution and the mixture was stirred at 60°C for 2 hours, while keeping the pH in a range of 8.8 - 8.5 by intermittently adding 1N-NaOH solution. The resulting solution was centrifuged to remove solids and the solution was filtered. The filtrate was concentrated to dryness in vacuo to afford a zein product (Purity as protein : 86.1%, Yield : 23.9%).

### Comparative Example 2

To 100g of gluten meal were added 500ml of 90% (V/V) aqueous ethyl alcohol solution and the mixture was stirred at 60°C for 2 hours, while keeping the pH in a range of 8.8 - 8.5 by intermittently adding 1N-NaOH solution. The resulting solution was centrifuged to remove solids and the solution was filtered.

The filtrate was concentrated until its solid concentration becomes 20%. The concentrate was added dropwise into chilled water of 10 folds in volume to precipitate a zein component therein. The precipitate was centrifuged to afford the zein product (Purity as protein : 97.2%, Yield : 16.2%).

### Comparative Test Example

1g of each zein product obtained by Examples 3 - 5 and Comparative Examples 1 and 2 was dissolved in 90% (V/V) aqueous ethyl alcohol of 20 folds in volume to measure a hue of the solution, with use of a hue meter having a cell of 2.54 cm (1 inch) in height.

On the other hand, a sample of each zein product was milled to prepare particles of 100 - 150 mesh. Each of the pulverized samples was charged in a vial (diameter : 1.5cm x height 3cm) and sealed to heat at 30°C for 10 minutes. Then, the smell of the sample was functionally evaluated with 10 steps graduation method from very strong to very weak in smell.

The results are shown in the following Table 3. Apparently, as seen from the results shown in the Table, the inherent yellowish color and smell of the zein can effectively be removed by the process according to the invention.

**Table 3**

| Sample | | Hue | Smell |
|---|---|---|---|
| Example | 3 | 6.8 | 3 |
| | 4 | 5.1 | 1 |
| | 5 | 6.2 | 3 |
| Comparative Example | 1 | 41.5 | 10 |
| | 2 | 24.5 | 9 |

## Claims

1. A process for purifying a zein containing material which comprises treating the material with a solvent at elevated temperatures
characterized in that impurities contained in the material are dissolved by contacting the material with an acetone solution having a concentration of no less than 70% (V/V) at a temperature of 25 - 60°C, and the remaining solid is separated from the solution and dried.

2. A process as claimed in Claim 1, wherein said acetone solution is kept at a temperature of 40 - 60°C.

3. A process for extracting and purifying a zein containing material, which comprises, in combination, the step of contacting the zein containing material with a solvent to extract a zein component, and treating the zein component according to the process of claim 1.

4. A process as claimed in Claim 3, wherein said solvent is 90% (V/V) ethyl alcohol.

5. A process as claimed in Claim 3, wherein said zein extraction step is carried out before the treatment with the acetone solution.

6. A process as claimed in Claim 3, wherein said zein extraction step is carried out after the treatment with the acetone solution.

7. A process as claimed in Claim 4, wherein said ethyl alcohol is kept at a temperature of 30 - 75°C.

## Patentansprüche

1. Verfahren zur Reinigung eines Zein enthaltenden Materials, umfassend die Behandlung des Materials mit einem Lösungsmittel bei erhöhten Temperaturen,
dadurch gekennzeichnet, daß die im Material enthaltenen Verunreinigungen durch Inkontaktbringen des Materials mit einer Acetonlösung mit einer Konzentration von nicht weniger als 70 % (V/V) bei einer Temperatur von 25 - 60°C gelöst werden und der verbliebene Feststoff von der Lösung abgetrennt und getrocknet wird.

2. Verfahren nach Anspruch 1, wobei die Acetonlösung auf einer Temperatur von 40 - 60°C gehalten wird.

3. Verfahren zur Extraktion und Reinigung eines Zein enthaltenden Materials, das in einer Kombination den Schritt des Inkontaktbringens des Zein enthaltenden Materials mit einem Lösungsmittel zur Extraktion eines Zeinbestandteils und Behandeln des Zeinbestandteils gemaß dem Verfahren von Anspruch 1 umfaßt.

4. Verfahren nach Anspruch 3, wobei das Lösungsmittel 90 %iger (V/V) Ethylalkohol ist.

5. Verfahren nach Anspruch 3, wobei der Zeinextraktionsschritt vor der Behandlung mit der Acetonlösung durchgeführt wird.

6. Verfahren nach Anspruch 3, wobei der Zeinextraktionsschritt nach der Behandlung mit der Acetonlösung durchgeführt wird.

7. Verfahren nach Anspruch 4, wobei der Ethylalkohol auf einer Temperatur von 30 - 75°C gehalten wird.

## Revendications

1. Procédé de purification d'un matériau contenant de la zéine qui comprend de traiter le matériau avec un solvant à des températures élevées caractérisé en ce que les impuretés contenues dans le matériau sont dissoutes par mise en contact du matériau avec une solution d'acétone qui a une concentration qui n'est pas inférieure à 70 % (V/V) à une température de 25-60°C, et on sépare le solide restant de la solution et on sèche.

2. Procédé selon la revendication 1, où on maintient la solution d'acétone à une température de 40-60°C.

3. Procédé d'extraction et de purification d'un matériau contenant de la zéine, qui comprend, en combinaison, l'étape de mettre en contact le matériau contenant la zéine avec un solvant pour extraire un composant de zéine, et le traitement du composant de zéine selon le procédé de la revendication 1.

4. Procédé selon la revendication 3, où ledit solvant est de l'éthanol à 90 % (V/V).

5. Procédé selon la revendication 3, où on réalise ladite étape d'extraction de zéine avant le traitement par la solution d'acétone.

6. Procédé selon la revendication 3, où on réalise ladite étape d'extraction de zéine après le traitement par la solution d'acétone.

7. Procédé selon la revendication 4, où on conserve ledit éthanol à une température de 30-75°C.
